# EUROPÄISCHE PATENTSCHRIFT

(11) **EP 2 622 237 B1**
(45) Veröffentlichungstag und Bekanntmachung des Hinweises auf die Patenterteilung: **22.10.2014**
(21) Anmeldenummer: 11730305.7
(22) Anmeldetag: 07.07.2011
(51) Int. Cl.: F16C 33/38, F16C 33/50, F16C 33/54

(54) **WÄLZLAGER MIT MEHRTEILIGEM KÄFIG**
ROLLING ELEMENT BEARINGS COMPRISING A MULTI-PART CAGE
ROULEMENT POSSÉDANT UNE CAGE EN PLUSIEURS PARTIES

(30) Priorität: 30.09.2010 DE 102010047142
(43) Veröffentlichungstag der Anmeldung: 07.08.2013
(73) Patentinhaber: Schaeffler Technologies GmbH & Co. KG, 91074 Herzogenaurach (DE)
(72) Erfinder: JAEKEL, Jesko, 90562 Kalchreuth (DE); MEDERER, Tobias, 90596 Schwanstetten (DE); PITZ, Matthias, 91056 Erlangen (DE)
(86) Internationale Anmeldenummer: PCT/EP2011/061526
(87) Internationale Veröffentlichungsnummer: WO 2012/041548

(56) Entgegenhaltungen:
- DE-U1-202005 005 999
- JP-A- 2007 332 997
- JP-U- H 053 645
- US-A- 1 894 595
- US-A- 4 865 473

## Beschreibung

### Gebiet der Erfindung

Die Erfindung betrifft ein Wälzlager, insbesondere Rollen-/Nadellager, mit einem Käfig, der zumindest einen Innenkäfig und zumindest einen äußeren Stützkäfig aufweist, die den Wälzkörpern angepasste Fenster mit seitlichen, mehrere Fenster verbindende Borden und Querstreben aufweisen, in denen die Wälzkörper geführt und gegen Herausfallen gesichert sind.

### Hintergrund der Erfindung

Durch die gattungsbildende WO 2009/127 191 A1 ist es bekannt, dem Käfig einen vollringförmig ausgebildeten Innenkäfig und einen äußeren vollringförmig ausgeführten Stützkäfig zuzuordnen, die in Zusammenschau zur Führung und Stütze der Wälzkörper geformt und ausgebildet sind. Die ringförmigen Käfige sind dabei aneinander befestigt.

Nachteilig ist es, dass der aus einem ringförmigen Innenkäfig und ringförmigen äußeren Stützkäfig zusammengebaute Käfig wie ein Vollmaterialkäfig zu behandeln ist und z. B. nicht beliebig auf einem Lagerzapfen montiert werden kann. Dadurch, dass sowohl der Innenkäfig als auch der Stützkäfig als geschlossene Ringe vorliegen müssen, sind diese auch relativ aufwändig in der Herstellung.

### Aufgabe der Erfindung

Ausgehend von den Nachteilen des bekannten Standes der Technik liegt der Erfindung deshalb die Aufgabe zu Grunde, einen Käfig für ein Wälzlager weiter zu verbessern, Gewicht zu sparen, die Herstellung zu vereinfachen und auch die Montage bei schwierigen Einbauverhältnissen zu erleichtern.

### Beschreibung der Erfindung

Erfindungsgemäß wird diese Aufgabe durch die kennzeichnenden Merkmale des Anspruchs 1 gelöst.

Nach der Erfindung wird eine Verklipsung vorgeschlagen, bei der die Innenkäfigschalen gegenüber den Stützkäfighalbschalen um ein Fenster gegeneinander in Umfangsrichtung verdreht zueinander angeordnet sind. Die Halbschalen weisen dabei Endquerstreben auf und diese Endquerstreben sind um die Hälfte ihrer Umfangserstreckung schmäler ausgebildet als die übrigen Querstreben. Dadurch ergibt sich die Möglichkeit, dass die in den Endfenstern eingebauten Wälzkörper die Verbindung der Halbschalen aneinander sicherstellen und als Klipskörper dienen. Dadurch, dass die endseitigen Querstreben um die Hälfte geschmälert sind, bilden eine verschmälerte Querstrebe an der einen Halbschale und eine verschmälerte Querstrebe an der anderen Halbschale zusammen wieder eine Querstrebe, die der üblichen Breite der Querstreben entspricht. Die Wälzkörper bilden dann über die Fenster und die Querstreben die Verriegelung der Halbschalen aneinander nach dem Zusammenklipsen. Die Breite der Endquerstreben der Halbschalen können auch größer sein, als eine übliche Querstrebe. Dies führt dazu, dass die letzten Querstreben die gleiche Breite aufweisen müssen, wie die Summe der Breiten der Endstreben. Dies muss sowohl im Innen- als auch im Stützkäfig erfolgen.

Die Schalen sind in dabei vorteilhafter Weise aus Stahlblechbandmaterial durch Profilieren, Stanzen, Rundbiegen oder Rundrollen günstig hergestellt.

Für die Stützkäfigschalen kommt Material größerer Dicke als das für die Innenkäfigschalen zur Anwendung, um bei einem außen geführten Käfig eine bessere Abstützung zu ermöglichen und bei kleinem Innenkäfigring oder -schalen Kräfte aufnehmen zu können. Die Innenkäfigschalen sind in ihrer Materialstärke dicker gewählt, wenn Gefahr besteht, dass das Gewicht der Lagerrollen bei größeren Käfigen den Innenring verformt. Die Schalen können auch aus Rohrabschnitten durch Aufweiten mit einem dehnbaren Kunststoffkern hergestellt sein, wobei anschließend die Fenster ausgestanzt werden. Schließlich können die Schalen auch spanend hergestellt sein. Die Schalen können weiter auch aus Kunststoff oder Aluminium gefertigt sein, was zur Reduzierung der Zentrifugalkraft und des Gewichts führt. Die Innen- oder Stützkäfige können auch zur Reduzierung der Reibung und zur Erhöhung der Verschleißfestigkeit beschichtet sein.

Zur besseren Führung der Wälzkörper weisen die Querstreben der Schalen an ihren den Borden benachbarten Enden einander zugewandte Vorsprünge auf, in denen die Wälzkörper sicher geführt werden können. Die Querstreben der Innenkäfigschalen sind vorzugsweise mittig mit etwa U-förmigen oder M-förmigen, nach innen gerichteten Verformungen ausgestattet, so dass zu dem Stützkäfig ein Abstand gegeben ist, in dem die Wälzkörper besser gehalten werden können. Dabei sind die Querstreben in vorteilhafter Weise zwischen den Vorsprüngen schmäler ausgeführt als die Querstreben mit Vorsprüngen, so dass die Wälzkörper, insbesondere die Rollen oder Nadeln gut zentriert geführt sind. Die Stützringschalen können zur besseren Führung des Innenkäfigringes oder der Innenkäfigschalen nach innen gewölbte Borde aufweisen, sodass eine nach innen gewölbte U-Form entsteht. Es sei noch darauf hingewiesen, dass die Anlauffläche des Stützkäfigs größer ausgebildet sein kann als die Anlauffläche des Innenringes.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: eine perspektivische Ansicht einer Stützkäfighalbschale;
- Figur 1a: eine Seitenansicht der Stützhalbschale gemäß Figur 1;
- Figur 2: eine perspektivische Ansicht einer Innenkäfighalbschale mit eingesetzten Wälzkörpern;
- Figur 2a: eine Seitenansicht der Innenkäfighalbschale gemäß Figur 2
- Figur 3: eine perspektivische Ansicht einer ineinander gefügten Innenkäfighalbschale und einer Stützkäfighalbschale, in denen Wälzkörper eingesetzt sind;
- Figur 3a: eine Seitenansicht der zusammengesetzten Innenkäfig- und Stützkäfighalbschale gemäß Figur 3;
- Figur 4: eine perspektivische Ansicht von je zwei ineinander gefügten Innenkäfighalbschalen und Stützkäfighalbschalen kurz vor dem Zusammenfügen um eine Welle;
- Figur 4a: eine Seitenansicht der Halbschalen gemäß Figur 4;
- Figur 5: eine perspektivische Ansicht eines aus vier Halbschalen zusammengesetzten Vollkäfigs;
- Figur 5a: eine Seitenansicht des Vollkäfigs gemäß Figur 5;
- Figur 5b: einen Schnitt durch den Vollkäfig gemäß Figur 5.

### Ausführliche Beschreibung der Zeichnungen

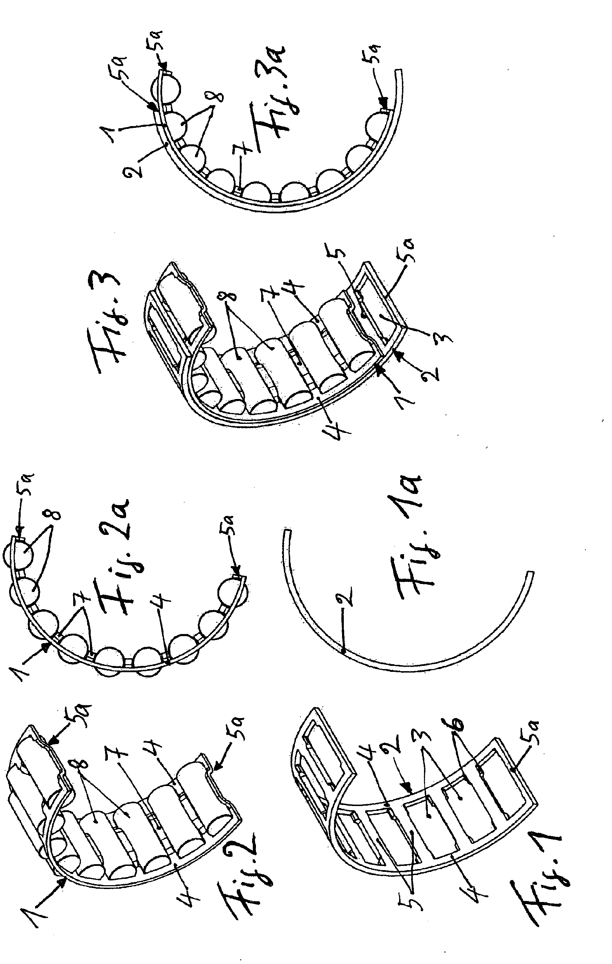

In den Figuren 1 bis 5b ist, soweit im Einzelnen dargestellt, mit 1 eine Innenkäfighalbschale bezeichnet, die innerhalb einer Stützkäfighalbschale 2 angeordnet ist. Beide Halbschalen weisen Fenster 3 auf, die seitlich von Borden 4 und untereinander durch Querstreben 5 begrenzt sind. Die Borde 4 erstrecken sich halbringförmig seitlich entlang den Innenkäfighalbschalen 1 und den Stützkäfighalbschalen 2. An den den Borden 4 benachbarten Enden der Querstreben 5 sind Vorsprünge 6 vorgesehen, die die Fenster 3 an ihren den Borden 4 zugewandten Ecken schmälern. Die Querstreben 5 sind sowohl bei den Innenkäfighalbschalen 1 als auch den Stützkäfighalbschalen 2 zwischen den Vorsprüngen 6 schmäler ausgebildet, wobei die Querstreben 5 an den Innenkäfighalbschalen 2 zwischen den Vorsprüngen 6 U-förmige nach innen gerichtete Verformungen 7 aufweisen.

Desweiteren geht aus den Figuren 1 bis 5b deutlich hervor, dass die Endquerstreben 5a an den Enden der Halbschalen um die Hälfte der umfangsmäßigen Erstreckung der normalen Querstreben 5 schmäler ausgeführt sind, so dass zwei Endquerstreben 5a aneinander gefügt, die Breite der üblichen Querstreben 5 ergeben. Die einander zugewandten Stirnseiten der Schalen/Endquerstreben 5a sind eben ausgeführt, da die Endquerstreben 5a dort keine Vorsprünge 6 aufzuweisen brauchen.

In die durch die Innenkäfighalbschalen 1 und die Stützkäfighalbschalen 2 gebildeten Ausnehmungen der Fenster 3 sind Wälzkörper 8 eingesetzt, die als Rollen ausgebildet sind.

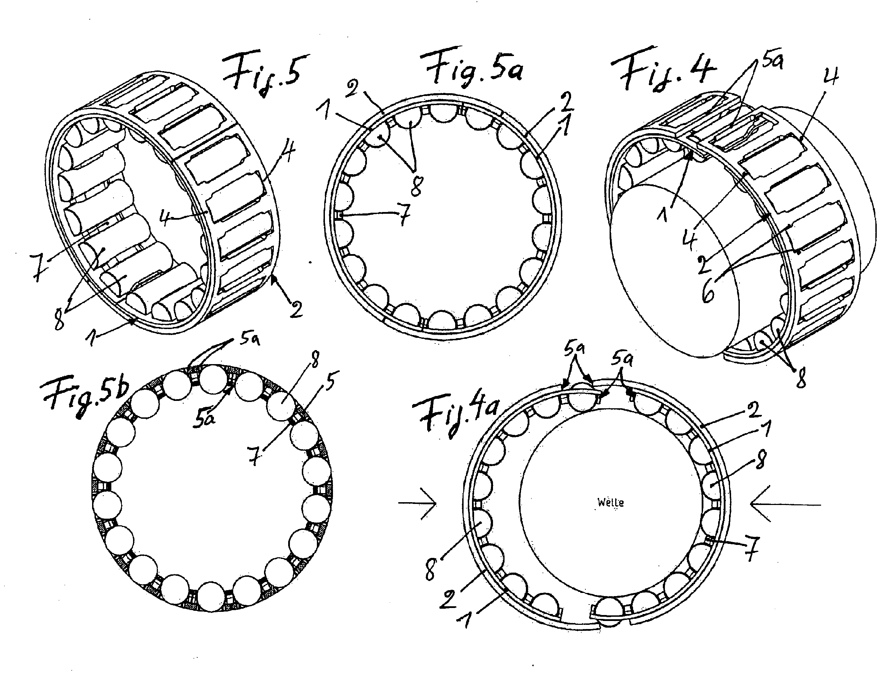

Wie insbesondere in den Figuren 4 bis 5b dargestellt, bilden die in den endseitigen Fenstern 3 der Halbschalen eingesetzten Wälzkörper 8 nach dem Zusammenklipsen der Halbschalen die Verriegelung derselben aneinander, so dass sich, wie in den Figuren 5 bis 5b dargestellt, ein ringförmiger Käfig ergibt, der aus vier Halbschalen zusammengesetzt ist.

### Bezugszahlenliste

- 1: Innenkäfighalbschalen
- 2: Stützkäfighalbschalen
- 3: Fenster
- 4: Borde
- 5: Querstreben
- 5a: Endquerstreben
- 6: Vorsprünge
- 7: Verformungen
- 8: Wälzkörper

## Patentansprüche

1. Wälzlager, insbesondere Rollen-/Nadellager, mit einem Käfig, der einen Innenkäfig und einen äußeren Stützkäfig aufweist, die den Wälzkörpern (8) angepasste Fenster (3) mit seitlichen, mehrere Fenster (3) verbindenden Borden (4) und Querstreben (5) aufweisen, in denen die Wälzkörper (8) geführt und gegen Herausfallen gesichert sind, **dadurch gekennzeichnet, dass** der Käfig aus vier separaten Halbschalen, nämlich aus zwei den Innenkäfig bildenden Innenkäfighalbschalen (1) und zwei den Stützkäfig bildenden Stützkäfighalbschalen (2) zusammengesetzt ist, wobei jeweils eine der Innenkäfighalbschalen (1) und eine der Stützkäfighalbschalen (2) endseitig um ein oder mehrere Fenster (3) gegeneinander in Umfangsrichtung verdreht ineinander gefügt sind und wobei die in den endseitigen Fenstern (3) der Halbschalen (1, 2) eingesetzten Wälzkörper (8) die Halbschalen (1, 2) aneinander verriegeln.

2. Wälzlager nach Anspruch 1, **dadurch gekennzeichnet, dass** die Halbschalen (1, 2) jeweils Endquerstreben (5a) aufweisen, die um die Hälfte ihrer Umfangserstreckung schmäler ausgeführt sind als die Querstreben (5).

3. Wälzlager nach einem der vorhergehenden Ansprüche, **dadurch gekennzeichnet, dass** die Halbschalen (1, 2) aus Stahlblechmaterial durch Profilieren, Stanzen/Längen, Rundbiegen oder Rundrollen hergestellt sind.

4. Wälzlager nach einem der vorhergehenden Ansprüche, **dadurch gekennzeichnet, dass** für die Stützkäfighalbschalen (2) Material anderer Dicke als das für die Innenkäfighalbschalen (1) gewählt ist.

## Claims

1. Anti-friction bearing, in particular roller/needle bearing, having a cage which has an inner cage and an outer supporting cage which have windows (3) which are adapted to the rolling bodies (8) with lateral rims (4) which connect a plurality of windows (3) and transverse members (5), in which the rolling bodies (8) are guided and are secured against fulling out, **characterized in that** the cage is assembled from four separate half shells, namely from two inner-cage half shells (1) which form the inner cage and two supporting-cage half shells (2) which form the supporting cage, in each case one of the inner-cage half shells (1) and one of the supporting-cage half shells (2) being fitted into one another such that they are rotated on the end side by one or more windows (3) with respect to one another in the circumferential direction, and the rolling bodies (8) which are inserted in the end-side windows (3) of the half shells (1, 2) locking the half shells (1, 2) to one another.

2. Anti-friction bearing according to Claim 1, **characterized in that** the half shells (1, 2) in each case have end transverse members (5a) which are configured to be narrower by half their circumferential extent than the transverse members (5).

3. Anti-friction bearing according to one of the preceding claims, **characterized in that** the half shells (1, 2) are manufactured from steel sheet material by way of profiling, stamping/elongating, circular blending or circular rolling.

4. Anti-friction bearing according to one of the preceding claims, **characterized in that** material of a different thickness is selected for the supporting-cage half shells (2) than for the inner-cage half shells (1).

## Revendications

1. Palier à roulement, en particulier palier à rouleaux/aiguilles, comprenant une cage qui présente une cage interne et une cage de support externe, qui présentent des fenêtres (3) adaptées aux corps de roulement (8) avec des bords latéraux (4) et des membrures transversales latérales (5) reliant plusieurs fenêtres (3), dans lesquels les corps de roulement (8) sont guidés et protégés contre la chute, **caractérisé en ce que** la cage se compose de quatre demi-coques séparées, à savoir de deux demi-coques de cage interne (1) formant la cage interne et de deux demi-coques de cage de support (2) formant la cage de support, l'une des demi-coques de cage interne (1) et l'une des demi-coques de cage de support (2) étant à chaque fois assemblées l'une dans l'autre du côté de l'extrémité de manière tournée l'une par rapport à l'autre dans la direction périphérique autour d'une ou plusieurs fenêtres (3) et les corps de roulement (8) insérés dans les fenêtres (3) des demi-coques (1, 2) du côté de l'extrémité verrouillant les demi-coques (1, 2) l'une à l'autre.

2. Palier à roulement selon la revendication 1, **caractérisé en ce que** les demi-coques (1, 2) présentent à chaque fois des membrures transversales d'extrémité (5a) qui sont réalisées de manière plus étroite que les membrures transversales (5) autour de la moitié de leur étendue périphérique.

3. Palier à roulement selon l'une quelconque des revendications précédentes, **caractérisé en ce que** les demi-coques (1, 2) sont fabriquées sous forme de matériau en tôle d'acier par profilage, estampage/découpe à longueur, cintrage rond ou profilage par roulage rond.

4. Palier à roulement selon l'une quelconque des revendications précédentes, **caractérisé en ce que** pour les demi-coques de cage de support (2), on choisit un matériau ayant une épaisseur différente de celle de celui pour les demi-coques de cage interne (1).
